# FASCICULE DE BREVET EUROPEEN

(11) **EP 0 972 090 B1**
(45) Date de publication et mention de la délivrance du brevet: **28.09.2005**
(21) Numéro de dépôt: 98917279.6
(22) Date de dépôt: 01.04.1998
(51) Int. Cl.: C22C 38/18, F16C 33/62

(54) **ACIER ET PROCEDE POUR LA FABRICATION D'UNE PIECE POUR ROULEMENT**
STAHL UND VERFAHREN ZUR HERSTELLUNG VON LAGERTEILE
STEEL AND PROCESS FOR THE MANUFACTURE OF A PART FOR BALL BEARING

(30) Priorité: 04.04.1997 FR 9704092
(43) Date de publication de la demande: 19.01.2000
(73) Titulaire: ASCOMETAL, 92800 Puteaux (FR); SNR ROULEMENTS, F-74010 Annecy Cedex (FR); VALTI - Société Anonyme pour la Fabrication de Tubes Roulements, 21500 Montbard (FR)
(72) Inventeur: BELLUS, Jacques, F-57160 Scy-Chazelles (FR); BAUDRY, Gilles, F-57050 Ban Saint Martin (FR); DUDRAGNE, Gilles, F-74540 Alby sur Chéran (FR); GIRODIN, Daniel, F-74150 Marcellaz Albanais (FR); JACOB, Gérard, F-21500 Montbard (FR); VINCENT, Alain, F-69800 Manissieux Saint Priest (FR); LORMAND, Gérard, F-69100 Villeurbanne (FR)
(74) Mandataire: Bouget, Lucien
(86) Numéro de dépôt international: PCT/FR1998/000653
(87) Numéro de publication internationale: WO 1998/045495

(56) Documents cités:
- FR-A- 1 528 752
- GB-A- 1 439 072
- GB-A- 1 569 951
- GB-A- 2 275 509
- GB-A- 2 284 616
- SU-A- 161 047
- PATENT ABSTRACTS OF JAPAN vol. 18, no. 125 (C-1191), 18 avril 1994 & JP 06 010097 A (SUMITOMO METAL IND.LTD.), 18 janvier 1994,
- PATENT ABSTRACTS OF JAPAN vol. 17, no. 225 (C-1055), 10 mai 1993 & JP 04 362123 A (KAWASAKI STEEL CORP.), 15 décembre 1992,
- PATENT ABSTRACTS OF JAPAN vol. 95, no. 004, 31 mai 1995 & JP 07 027139 A (NIPPON SEIKO KK), 27 janvier 1995,

## Description

La présente invention concerne la fabrication d'une pièce pour roulement, et en particulier d'une bague pour roulement à bille, à aiguilles ou à rouleaux.

Les pièces pour roulement, telles que les bagues, les billes, les aiguilles ou les rouleaux, sont, en général, fabriquées en acier du type 100Cr6 ou 100CrMn6, contenant de 0,6 à 1,5 % de carbone, de 1,3 à 1,6 % de chrome, de 0,3 à 1% de manganèse et moins de 0,4 % de silicium, ayant une très bonne propreté inclusionnaire. L'acier est utilisé sous forme de barres laminées, de tubes sans soudure ou de fils, dans lesquels sont découpés des lopins qui sont mis en forme par déformation plastique à froid ou à chaud puis soumis à une trempe et un revenu avant d'être usinés. Les pièces ainsi obtenues ont une grande dureté et la ténacité requise pour leur permettre de bien résister à la fatigue de roulement, au moins dans les conditions habituelles d'utilisation, notamment pour des températures en service inférieures à 150 °C. Cependant, les pièces ainsi constituées ont une résistance à la fatigue de roulement insuffisante pour des conditions de service plus sévères, qui tendent à se généraliser. Ces conditions de service plus sévères sont caractérisées, notamment, par une température de service supérieure à 150°C et pouvant atteindre 350°C, et/ou par la présence d'un phénomène de détérioration des surfaces de roulement par indentation. Ce phénomène consiste en l'amorçage de fissures en surface provoqué par les indentations, c'est à dire les déformations engendrées par des particules dures présentes dans le lubrifiant.

Pour limiter l'effet de l'indentation, il a été proposé d'utiliser des matériaux à très haute dureté tels que des céramiques ou des dépôts de matériaux durs. Mais cette technique présente l'inconvénient d'être peu fiable du fait de la trop grande fragilité de ces matériaux, fragilité qui les rend très sensibles au moindre défaut.

On a également proposé, par exemple dans le brevet US 5 030 017, d'utiliser un acier contenant notamment de 0,3 % à 0,6 % de carbone, de 3 % à 14 % de chrome, de 0,4 % à 2 % de molybdène, de 0,3 % à 1 % de vanadium et moins de 2 % de manganèse. Les pièces sont cémentées ou carbonitrurées au voisinage de la surface de roulement de façon à obtenir une somme des teneurs en carbone et azote comprise entre 0,03 % et 1 %, puis trempées pour que leur structure micrographique comporte de 20 % à 50 % (en % en volume) d'austénite résiduelle dans une couche de surface représentant 10 % à 25 % du volume de la pièce. Cette technique présente le double inconvénient de nécessiter l'emploi d'un acier fortement chargé en éléments d'alliage, donc coûteux, et la réalisation d'un traitement de cémentation ou de carbonitruration, traitement long et coûteux.

On a également proposé dans la demande de brevet allemand DE 195 24 957 d'utiliser un acier contenant de 0,9 % à 1,3 % de carbone, de 0,6 % à 1,2 % de silicium, de 1,1 % à 1,6 % de manganèse et de 1,3 % à 1,7 % de chrome, le reste étant du fer et des impuretés résultant de l'élaboration, la structure de cet acier contenant de 7 % à 25 % d'austénite résiduelle. Cet acier ne présente par contre, du fait de sa composition chimique, aucune garantie de coulabilité, d'aptitude à la déformation à froid ainsi que de teneur et de stabilité de l'austénite résiduelle. La teneur en austénite résiduelle spécifiée et nécessaire pour améliorer la résistance à la fatigue sous indentation nécessite d'ailleurs, pour cet acier, la mise en oeuvre, sur les roulements, d'un traitement thermique peu commode comportant une étape de maintien à environ 100°C durant plus de 10 heures entre trempe et revenu sans retour à l'ambiante après trempe ou avant revenu. Par ailleurs, en présence de sollicitations multidirectionnelles inférieures à la limite élastique cyclique, son austénite n'est stable plus de 2000 heures que pour des contraintes thermiques inférieures à 120°C, ce qui est trop faible pour certaines applications.

Pour améliorer la tenue à la fatigue des aciers à roulement, on a proposé, notamment dans le brevet GB-A-1.439.072, d'effectuer un traitement thermique consistant en une austénitisation suivie d'un refroidissement rapide jusqu'à une température comprise entre 480°C et 725°C suivi d'un maintien long à cette température pour engendrer une transformation perlitique, puis d'un réchauffage rapide jusqu'à une température d'austénitisation et enfin d'une trempe. Ce traitement est appliqué, en particulier, à un acier contenant de 0,8 à 1 % de carbone, 0,5 à 0,8 % de silicium, de 1,4 à 1,7% de manganèse et de 1,4 à 1,8% de chrome.

On a également proposé, dans le JP-A-4-362123, un acier pour roulement renfermant en poids, 0,40 à 0,80 % C, 0,01 à 2,00 % Si, 0,20 à 2,00 % Mn et l'un au moins du Cr (≤0,80 %) et du Mo (≤1,00 %) et un traitement thermique pour améliorer la tenue à la fatigue de cet acier.

Le but de la présente invention est de remédier à ces inconvénients en proposant un moyen pour fabriquer, de façon économique et notamment à l'aide d'un traitement thermique relativement standard, une pièce pour roulement résistant à l'indentation, notamment lorsqu'il y a des usages ponctuels ou occasionnels au-dessus de 300°C, et peu fragile.

A cet effet, l'invention a pour objet un acier pour la fabrication d'une pièce pour roulement ayant une composition chimique selon la revendication.
De préférence, la composition chimique de l'acier est telle que, séparément, ou mieux encore simultanément, d'une part :
0,8 % ≤ Mn ≤ 1,2 %
Si ≤ 1,7 %
et d'autre part:
0,9 % ≤ C ≤ 1,1 %
1,3 % ≤ Cr ≤ 1,6 %

La teneur en silicium est supérieure à 1,2 % ; les inventeurs ont, en effet, constaté de façon inattendue, que, lorsque, simultanément, la teneur en silicium est supérieure à 1,2 % et la teneur en manganèse est inférieure à 1,5 %, et de préférence inférieure à 1,2 % mais supérieure à 0.8 %, la stabilité de l'austénite est très sensiblement améliorée.

L'invention concerne également un procédé pour la fabrication d'une pièce pour roulement selon lequel :
- on approvisionne un demi-produit en acier selon l'invention,
- on met en forme le demi-produit par déformation plastique à chaud afin d'obtenir une ébauche de produit, et, plus particulièrement, une ébauche de tube sans soudure,
- on effectue sur l'ébauche de produit un traitement de globulisation consistant en un chauffage à une température comprise entre 750 °C et 850 °C suivi d'un refroidissement dont la vitesse maximale est de 10 °C/heure jusqu'à 650 °C, afin d'obtenir une structure de dureté inférieure à 270 HV et comportant une fine dispersion de carbures, et, éventuellement, une mise en forme par déformation plastique à froid, par exemple par laminage à froid ou par étirage à froid, afin d'obtenir un produit,
- on découpe le produit pour obtenir un tronçon qu'on met en forme par déformation plastique à froid ou à chaud, ou par usinage, afin d'obtenir une ébauche de pièce pour roulement,
- et on effectue sur l'ébauche de pièce pour roulement un traitement thermique de trempe par refroidissement, par exemple à l'huile, après austénitisation entre 800 °C et 950 °C et un traitement thermique de revenu entre 100 °C et 400 °C et de préférence en dessous de 250 °C, de façon à obtenir une pièce pour roulement ayant une structure dont la dureté est comprise entre 58 HRC et 67 HRC et qui est constituée de carbures résiduels, de martensite et de 5 % à 30 % d'austénite résiduelle.

L'invention concerne, enfin, d'une part, un tube sans soudure en acier selon l'invention, et, d'autre part, une pièce pour roulement en acier selon l'invention, ayant une structure constituée de carbures résiduels, de martensite et de 5 % à 30 % d'austénite résiduelle stable thermiquement jusqu'à 400 °C au moins.

L'invention va maintenant être décrite de façon plus précise, mais non limitative, et être illustrée par des exemples.

Pour fabriquer une pièce de roulement telle qu'une bague ou un corps roulant ayant une bonne résistance à l'indentation, par exemple à partir d'un tube sans soudure, on utilise un acier dont la composition chimique comprend, en poids :
- plus de 0,6 % et, de préférence plus de 0,9 % de carbone pour obtenir une dureté suffisante et un taux d'austénite résiduelle suffisant, mais moins de 1,5 % et, de préférence, moins de 1,1 % pour éviter la formation de ségrégations trop importantes et pour limiter la formation de carbures primaires,
- plus de 1,2 % de silicium, de façon à augmenter la stabilité à chaud de l'austénite résiduelle (entre 170°C et 450 °C, environ, et de préférence au dessus de 300 °C) et la dureté, mais, moins de 2,5 %, et de préférence, moins de 1,7 %, car lorsque la teneur en silicium est trop élevée, l'acier devient trop fragile notamment pour pouvoir être mis en forme par déformation plastique,
- plus de 0,4 % de manganèse, et de préférence, plus de 0,8 % pour pouvoir obtenir une structure trempée ayant une teneur en austénite résiduelle supérieure à 5 % et de préférence supérieure à 15 % ; la teneur en manganèse doit être telle que : Mn ≤ 0,75 + 0,55 x Si pour obtenir une bonne coulabilité sans laquelle il devient difficile d'obtenir un acier suffisamment propre pour qu'il ait une bonne résistance à la fatigue de roulement , et telle que : Mn ≤ 2,5 - 0,8 x Si pour permettre les opérations de parachèvement et la mise en forme par déformation plastique à froid ; il résulte de ces relations que la teneur en manganèse doit être inférieure à 1,5 %, et il est préférable qu'elle soit inférieure à 1,2 %,
- de 0,2 %à 2 % de chrome, et , de préférence, de 1,3 % à 1,6 %, de façon, d'une part à obtenir une trempabilité suffisante, et, d'autre part, à former des semis de carbures globulaires de taille inférieure à 2 µm, uniformément répartis et en quantité suffisante,
- moins de 0,5 % de nickel, élément résiduel qui n'est pas indispensable mais qui a un effet favorable sur la trempabilité,
- moins de 0,2 % de molybdène, élément qui ralentit l'adoucissement au revenu,
- entre 0 % et 0,05 % d'aluminium et moins de 0,04 % de soufre, le reste étant du fer et des impuretés résultant de l'élaboration.

Cet acier est coulé, et, éventuellement, laminé pour fabriquer un demi-produit qui, lorsqu'on veut fabriquer une bague à partir d'un tube sans soudure, est un rond à tube.

Le demi produit est alors mis en forme par déformation plastique à chaud pour obtenir une ébauche de produit, par exemple, par laminage à chaud pour obtenir un tube sans soudure.

L'ébauche de produit est alors soumise à un traitement thermique de globulisation consistant en un chauffage à une température comprise 750 °C et 850°C suivi d'un refroidissement dont la vitesse maximale est de 10 °C/heure jusqu'à 650 °C, afin d'obtenir une structure de dureté inférieure à 270 HV et comportant une fine dispersion de carbures. Ce traitement thermique est nécessaire pour conférer à l'acier une bonne aptitude à la mise en forme par déformation plastique à froid et une bonne usinabilité, procédé utilisé pour fabriquer, par exemple, par laminage à froid ou par étirage à froid, un produit. Ce produit, qui peut être un tube sans soudure, est caractérisé par le fait qu'il est bien calibré. Il sert à fabriquer les ébauches de pièces, par exemple, les ébauches de bagues de roulement.

La fabrication des ébauches de pièces, qui se fait par mise en forme à froid ou à chaud ou par usinage de tronçons découpés dans le produit, se termine par un traitement thermique constitué d'une trempe et d'un revenu. On obtient, ainsi, une pièce pour roulement. La température d'austénitisation avant trempe, supérieure à 800 °C, est ajustée de façon à obtenir après la trempe une structure constituée de martensite, de 5% à 30% d'austénite résiduelle et d'un réseau de carbures résiduels. Le taux d'austénite résiduelle dont la présence est indispensable pour obtenir une bonne résistance à l'indentation dépend de la valeur du point Ms (température de début de transformation martensitique) qui dépend, elle même, à la fois de la composition de l'acier et des conditions d'austénitisation. L'Homme du Métier sait déterminer ces paramètres, par exemple à l'aide d'essais dilatométriques. Le revenu qui est plus
exactement un détensionnement, est effectué par chauffage au dessus de 100 °C afin de stabiliser la structure, mais inférieure à 400 °C et de préférence inférieure à 250 °C pour ne pas déstabiliser l'austénite résiduelle

A titre de premier exemple, on a réalisé 10 coulées de laboratoire, une conforme à l'invention (repérée A), une autre en dehors des limites posées par la composition choisie (repérée B) et 8 à titre de comparaison (repérées C, D, E, F, G, H, I et J). Ces coulées, auxquelles on a ajouté le 100Cr6 standard, destinées essentiellement à mettre en évidence l'effet des éléments d'alliage sur les diverses propriétés d'un acier à roulement, avaient les compositions chimiques suivantes (en % en poids, seuls les éléments principaux sont indiqués, le reste étant du fer et des impuretés) :

| | C | Si | Mn | Ni | Cr | Mo | Al | S |
|---|---|---|---|---|---|---|---|---|
| A | 0,957 | 1,508 | 1,006 | 0,138 | 1,632 | 0,019 | 0,033 | 0,008 |
| B | 0,972 | 1,080 | 1,100 | 0,161 | 1,520 | 0,023 | 0,038 | 0,010 |
| C | 0,950 | 2,501 | 1,016 | 0,132 | 1,571 | 0,021 | 0,034 | 0,007 |
| D | 0,959 | 2,508 | 2,074 | 0,126 | 1,607 | 0,021 | 0,033 | 0,007 |
| E | 0,938 | 0,446 | 2,110 | 0,129 | 1,605 | 0,020 | 0,035 | 0,008 |
| F | 0,972 | 1,509 | 2,045 | 0,124 | 1,539 | 0,019 | 0,032 | 0,008 |
| G | 0,950 | 1,513 | 0,263 | 0,131 | 1,570 | 0,020 | 0,027 | 0,006 |
| H | 0,952 | 0,501 | 1,022 | 0,139 | 1,606 | 0,021 | 0,022 | 0,004 |
| I | 0,985 | 1,040 | 0,345 | 0,149 | 1,490 | 0,017 | 0,032 | 0,009 |
| J | 0,966 | 2,060 | 0,297 | 0,159 | 1,520 | 0,019 | 0,038 | 0,006 |
| 100Cr6 | 1,000 | 0,200 | 0,300 | - | 1,500 | - | - | - |

Ces aciers ont été coulés sous forme de lingotins de 65 Kg qui ont été forgés pour former des barres carrées de 20 mm de côté, puis globulisées par un maintien pendant 1 heure à 30 °C au dessus de la température de fin de transformation de la perlite en austénite, suivi d'un refroidissement jusqu'à 650°C à une vitesse comprise entre 8 et 10°C par heure, complété par un refroidissement à l'air jusqu'à la température ambiante. L'aptitude à la déformation à froid a, alors, été évaluée par une mesure de résilience Kcu à 60°C exprimée en daJ/cm² ; lorsque cette résilience est supérieure à 4,2 daJ/cm² l'aptitude à la mise en forme à froid est bonne, elle est mauvaise dans le cas contraire. Les lopins ont été, en suite, trempés à l'huile froide après austénitisation à 895°C, et on a mesuré d'une part, le taux τ d'austénite résiduelle, et la température θ de début de déstabilisation de l'austénite résiduelle. On a également évalué la coulabilité. Les résultats ont été les suivants :

| | Si (%) | Mn (%) | 0,75+0,55Si | Coulabilité | 2,5-0,8Si | KCU à 60°C daJ/cm² | τ | θ |
|---|---|---|---|---|---|---|---|---|
| A | 1,508 | 1,006 | 1,579 | bon | 1,294 | 4,2 | 14 % | 390 °C |
| B | 1,080 | 1,100 | 1,344 | bon | 1,636 | 5,5 | 17 % | 400 ° |
| C | 2,501 | 1,016 | 2,125 | bon | 0,499 | 1,3 | 15 % | 405 °C |
| D | 2,508 | 2,074 | 2,129 | bon | 0,494 | 0,5 | 19 % | 440 °C |
| E | 0,446 | 2,110 | 0,995 | mauvais | 2,143 | 5,6 | nd | 260 °C |
| F | 1,509 | 2,045 | 1,580 | mauvais | 1,293 | 2,1 | 22 % | 410 °C |
| G | 1,513 | 0,263 | 1,582 | bon | 1,290 | 4,6 | 9 % | 350 °C |
| H | 0,501 | 1,022 | 1,025 | bon | 2,099 | 6,7 | 9 % | 225 °C |
| I | 1,040 | 0,345 | 1,322 | bon | 1,668 | 6,0 | 14 % | nd |
| J | 2,060 | 0,297 | 1,883 | bon | 0,852 | 4,4 | 12 % | nd |
| 100C6 | 0,200 | 0,300 | 0,86 | bon | 2,34 | 6,6 | 7 % | 170°C |

Ces résultats montrent que seules les coulées A conforme à l'invention et B réunissent toutes les propriétés souhaitées, à savoir, une bonne coulabilité, une bonne aptitude à la déformation à froid, un taux d'austénite résiduelle élevée, et une structure stable jusqu'à des températures élevées ; Ces deux dernières caractéristiques étant sensiblement plus élevées que les caractéristiques correspondantes du 100Cr6 standard.

De plus, des essais de stabilité de l'austénite résiduelle sous contrainte monotone et en compression cyclique, ont montré que :
- pour les coulées dont la teneur en silicium est supérieure à 1%, l'austénite résiduelle reste stable lorsqu'elle est soumise par compression à une contrainte équivalente de cisaillement de 1400 MPa, alors que dans les mêmes conditions, 50% de l'austénite résiduelle d'un acier 100Cr6 (contenant moins de 0,5% de Si) est déstabilisée,
- pour des essais de déstabilisation de l'austénite résiduelle en compression cyclique (contrainte équivalente de cisaillement évoluant entre 25 MPa et 1025 MPa à la fréquence de 200 Hz) aucune déstabilisation n'apparaît après 1 million de cycle, pour une coulée contenant environ 1 % de manganèse et 1,5 % de silicium (coulée A).

A titre de deuxième exemple, on a réalisé une coulée industrielle d'un acier selon l'invention avec lequel on fabriqué une bague pour roulement. La composition chimique de l'acier comprenait, en poids :
C = 0,9 %
Si = 1,25 %
Mn = 1 %
Cr= 1,4 %
Ni = 0,25 %
Mo = 0,015 %
le reste étant du fer et des impuretés résultant de l'élaboration.

Cet acier a été coulé et laminé sous forme d'un rond à tube de 100 mm de diamètre.

Le rond à tube a été percé à chaud entre deux cylindres puis laminé à chaud pour obtenir une ébauche de tube sans soudure de diamètres extérieur 67,5 mm et intérieur 36,5 mm. L'ébauche de tube a été soumise à un traitement de globulisation consistant en un maintien de 2 heures à 800°C suivi d'un refroidissement jusqu'à 650°C à la vitesse de 10°C par heure, de façon à obtenir une dureté Brinell de 240 HB. L'ébauche de tube a, alors, été laminée à froid pour obtenir un tube sans soudure de 42,9 mm de diamètre extérieur et 22,7 mm de diamètre intérieur.

Des bagues de roulement ont été découpées et usinées dans le tube, puis soumises à un traitement de trempe à l'huile après austénitisation à 900°C et revenue à 200°C de façon à obtenir une structure contenant 18% d'austénite résiduelle.

On a testé la résistance à l'indentation par des essais de type fatigue butée sous forte pression de Hertz en utilisant des bagues préalablement indentées au niveau des pistes par deux empreintes Vickers disposées symétriquement, et en mesurant les temps à l'écaillage des bagues. On a ainsi comparé des bagues selon l'invention et des bagues en 100C6 selon l'art antérieur, pour des empreintes dont les dimensions des diagonales étaient de 267 µm et 304 µm. Aussi bien pour les bagues selon l'invention que pour les bagues selon l'art antérieur, la dureté était de 63 HRC.

Les résultats ont été les suivants :

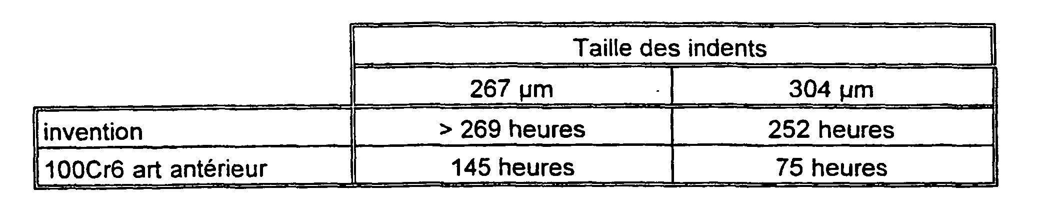

Ces résultats montrent que les bagues selon l'invention ont une durée de vie plus que doublée pour des indents importants.

L'acier selon l'invention est particulièrement adapté à la fabrication de bagues de roulement à partir de tubes sans soudure, mais il est également adapté à la fabrication de bagues, de billes, de rouleaux et d'aiguilles à partir de barres laminées ou de fils. Ces pièces peuvent être mises en forme par déformation plastique à chaud ou à froid, ou par usinage.

## Revendications

1. Acier pour la fabrication d'une pièce pour roulement **caractérisé en ce que** sa composition chimique comprend, en pourcentage de poids :
0,6 % ≤ C ≤ 1,5 %
0,4 % ≤ Mn < 1,5 %
1,2 % < Si ≤ 2,5 %
0,2 % ≤ Cr ≤ 2 %
0 % ≤ Ni ≤ 0,5 %
0 % ≤ Mo ≤ 0,2 %
0 % ≤ Al ≤ 0,05 %
S ≤ 0,04 %
le reste étant du fer et des impuretés résultant de l'élaboration, la composition satisfaisant , en outre, les relations :
Mn ≤ 0,75 + 0,55 x Si
Mn ≤ 2,5 - 0,8 x Si

2. Acier selon la revendication 1 **caractérisé en ce que** sa composition chimique est telle que :
0,8 % ≤ Mn ≤ 1,2 %
Si ≤ 1,7 %

3. Acier selon la revendication 1 **caractérisé en ce que** sa composition chimique est telle que :
0,9 % ≤ C ≤ 1,1 %
1,3 % ≤ Cr ≤ 1,6 %

4. Acier selon la revendication 4 **caractérisé en ce que** sa composition chimique est telle que :
0,8 % ≤ Mn ≤ 1,2 %
Si ≤ 1,7 %

5. Procédé pour la fabrication d'une pièce pour roulement **caractérisé en ce que** :
- on approvisionne un demi-produit en acier selon l'une quelconque des revendications 1 à 4,
- on met en forme le demi-produit par déformation plastique à chaud afin d'obtenir une ébauche de produit, et, plus particulièrement, une ébauche de tube sans soudure,
- on effectue sur l'ébauche de produit un traitement de globulisation consistant en un chauffage à une température comprise entre 750 °C et 850 °C suivi d'un refroidissement dont la vitesse maximale est de 10 °C/heure jusqu'à 650 °C, afin d'obtenir une structure de dureté inférieure à 270 HV et comportant une fine dispersion de carbures, et, éventuellement, une mise en forme par déformation plastique à froid, par exemple, un laminage à froid ou un étirage à froid, de façon à obtenir un produit,
- on découpe dans le produit un tronçon qu'on met en forme par déformation plastique à froid ou à chaud, ou par usinage, afin d'obtenir une ébauche de pièce pour roulement,
- et on effectue sur l'ébauche de pièce un traitement thermique de trempe isotherme ou par refroidissement par exemple à l'huile après austénitisation entre 800 °C et 950 °C, et un traitement thermique de revenu entre 100 °C et 400 °C et de préférence en dessous de 250 °C, de façon à obtenir une pièce pour roulement ayant une structure dont la dureté est comprise entre 58 HRC et 67 HRC et qui est constituée de carbures résiduels, de martensite et de 5 % à 30 % d'austénite résiduelle.

6. Procédé selon la revendication 5 **caractérisé en ce que** le produit est un tube sans soudure.

7. Tube sans soudure en acier selon l'une quelconque des revendications 1 à 4.

8. Pièce pour roulement en acier selon l'une quelconque des revendications 1 à 4 ayant une structure constituée d'un réseau de carbures, de martensite et de 5 % à 30 % d'austénite résiduelle.

9. Pièce selon la revendication 8 **caractérisée en ce qu'**elle est une bague.

## Patentansprüche

1. Stahl zur Herstellung eines Lagerteils, **dadurch gekennzeichnet, daß** seine chemische Zusammensetzung in Gewichtsprozent
0,6% ≤ C ≤ 1,5%
0,4% ≤ Mn < 1,5%
1,2% < Si ≤ 2,5%
0,2% ≤ Cr ≤ 2%
0% ≤ Ni ≤ 0,5%
0% ≤ Mo ≤ 0,2%
0% ≤ Al ≤ 0,05%
S ≤ 0,04%
umfaßt, wobei der Rest Eisen und aus der Herstellung herrührende Verunreinigungen ist und die Zusammensetzung überdies die Beziehungen
Mn ≤ 0,75 + 0,55 x Si
Mn ≤ 2,5 - 0,8 x Si
erfüllt.

2. Stahl gemäß Anspruch 1, **dadurch gekennzeichnet, daß** seine chemische Zusammensetzung
0,8% ≤ Mn ≤ 1,2%
Si ≤ 1,7%
ist.

3. Stahl gemäß Anspruch 1, **dadurch gekennzeichnet, daß** seine chemische Zusammensetzung
0,9% ≤ C ≤ 1,1%
1,3% ≤ Cr ≤ 1,6%
ist.

4. Stahl gemäß Anspruch 3, **dadurch gekennzeichnet, daß** seine chemische Zusammensetzung
0,8% ≤ Mn ≤ 1,2%
Si ≤ 1,7%
ist.

5. Verfahren zur Herstellung eines Lagerteils, **dadurch gekennzeichnet, daß**:
- man ein Stahlhalbzeug gemäß einem der Ansprüche 1 bis 4 bereitstellt,
- man das Halbzeug durch Kaltumformung unter Erhalten eines Rohlings und insbesondere eines nahtlosen Rohrrohlings verformt,
- man an dem Rohling eine Körnungsbehandlung, die aus dem Erhitzen auf eine Temperatur zwischen 750°C und 850°C, gefolgt von einem Abkühlen auf 650°C besteht, dessen Höchstgeschwindigkeit 10°C/Stunde ist, um eine Struktur mit einer Härte von unter 270 HV zu erhalten, die eine feine Carbiddispersion umfaßt und gegebenenfalls eine Verformung durch Kaltumformung, zum Beispiel ein Kaltwalzen oder ein Kaltziehen unter Erhalten eines Produkts ausführt,
- man von dem Produkt ein Stück abschneidet, das man durch Kalt- oder Warmverformung oder durch maschinelle Bearbeitung verformt, um einen Lagerteilrohling zu erhalten
- und man an dem Rohling eine Wärmebehandlung der isothermen Härtung oder durch Abkühlen zum Beispiel mit Öl nach der Austenitisierung zwischen 800°C und 950°C und eine thermische Anlaßbehandlung zwischen 100°C und 400°C und bevorzugt unter 250°C so ausführt, daß ein Lagerteil erhalten wird, das eine Struktur aufweist, dessen Härte zwischen 58 HRC und 67 HRC beträgt und das sich aus Restkarbiden, Martensit und 5% bis 30% Restaustenit zusammensetzt.

6. Verfahren gemäß Anspruch 5, **dadurch gekennzeichnet, daß** das Produkt ein nahtloses Rohr ist.

7. Nahtloses Stahlrohr gemäß einem der Ansprüche 1 bis 4.

8. Lagerteil aus Stahl gemäß einem der Ansprüche 1 bis 4 mit einer Struktur, die sich aus einem Carbidgitter, Martensit und 5% bis 30% Restaustenit zusammensetzt.

9. Teil gemäß Anspruch 8, **dadurch gekennzeichnet, daß** es ein Ring ist.

## Claims

1. A steel for fabricating a bearing part **characterised in that** its chemical composition comprises, in % by weight:
0.6% ≤ C ≤ 1.5%
0.4% ≤ Mn ≤ 1.5%
1.2% ≤ Si ≤ 2.5%
0.2% ≤ Cr ≤ 2%
0% ≤ Ni ≤ 0.5%
0% ≤ Mo ≤ 0.2%
0% < Al ≤ 0.05%
S ≤ 0.04%
the remainder being iron and manufacturing impurities, the composition additionally complying with the following conditions :
Mn ≤ 0.75 + 0.55 x Si
Mn ≤ 2.5 - 0.8 x Si

2. A steel according to claim 1 **characterised in that** its chemical composition is such that:
0.8% ≤ Mn ≤ 1.2%
Si ≤ 1.7%

3. A steel according to claim 1 **characterised in that** its chemical composition is such that :
0.9% ≤ C ≤ 1.1%
1.3% ≤ Cr ≤ 1.6%

4. A steel according to claim 3 **characterised in that** its chemical composition is such that:
0.8% ≤ Mn ≤ 1.2%
Si ≤ 1.7%

5. Method of fabricating a bearing part **characterised in that** :
- a steel semi-finished product according to any one of claims 1 to 4 is supplied ;
- a said semi-finished product is formed by hot plastic deformation to obtain a product blank, more particularly, a seamless tube blank,
- the product blank is subjected to a spheroidising treatment consisting of a heating to a temperature between 750 and 850°C followed by a cooling, the maximum speed of which is 10°C/h before 650°C, in order to obtain a structure having a Vickers hardness less than 270 HV and including finely dispersed carbides, and, possibly, forming by cold plastic deformation, for example, cold rolling or cold drawing to obtain a product,
- a section is cut from the product and formed by hot or cold plastic deformation or by machining to obtain a bearing part blank, and
- the part blank is subjected to a final heat treatment consisting in isothermal quenching or cooling, for example in oil, after austenising it at a temperature in the range from 800°C to 950°C, and annealing at a temperature in the range from 100°C to 400°C, and preferably below 250°C, to obtain a bearing part having a structure whose Rockwell C hardness is in the range from 58 HRC to 67 HRC and which is made up of residual carbides, martensite and from 5% to 30% residual austenite.

6. A method according to claim 5 **characterised in that** the product is seamless tube.

7. Seamless tube made of steel according to any one of claims 1 to 4.

8. A bearing part made from steel according to any one of claims 1 to 4 having a structure comprising carbides, martensite and from 5% to 30% residual austenite.

9. A part according to claim 8 **characterised in that** it is a race.
